# EUROPÄISCHE PATENTANMELDUNG

(11) **EP 4 674 249 A1**
(43) Veröffentlichungstag der Anmeldung: **07.01.2026**
(21) Anmeldenummer: 25183240.8
(22) Anmeldetag: 17.06.2025
(51) Int. Cl.: A01D 41/127, A01D 43/08, G01N 21/85, G06V 10/82, G06V 20/56

(54) **SELBSTFAHRENDE ERNTEMASCHINE**

(30) Priorität: 02.07.2024 DE 102024118780
(71) Anmelder: CLAAS Selbstfahrende Erntemaschinen GmbH, 33428 Harsewinkel (DE)
(72) Erfinder: Belau, Sven Carsten, 33332 Gütersloh (DE); Neitemeier, Dennis, 59510 Lippetal (DE); Bönig, Ingo, Dr., 33330 Gütersloh (DE); Brune, Markus, 33428 Harsewinkel (DE); Titkemeier, Daniel, Osnabrück (DE); Dirksen, Matthis, Warendorf (DE)
(74) Vertreter: CLAAS Gruppe

(57) **Zusammenfassung**

Die vorliegende Erfindung betrifft eine selbstfahrende Erntemaschine (1), wobei die Erntemaschine (1) ein Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeitenden Erntegutes (2) sowie ein Kamerasystem (16) zur Erfassung von Bildern (41) eines die Erntemaschine (1) durchlaufenden Erntegutstromes (21) und eine Bildauswertungsvorrichtung (27) zur Auswertung der Bilder (41) umfasst, wobei die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an, insbesondere anorganischen, Verunreinigungen mittels eines Maschinenlernalgorithmus zu analysieren.

## Beschreibung

Die vorliegende Erfindung betrifft eine selbstfahrende Erntemaschine gemäß dem Oberbegriff des Anspruches 1. Weiterhin betriff die Erfindung ein Verfahren zur Analyse von Inhaltsstoffen im Erntegut gemäß dem Oberbegriff des Anspruches 15.

Aus der EP 4 052 560 A1 ist eine selbstfahrende Erntemaschine gemäß dem Oberbegriff des Anspruches 1 bekannt. Mittels eines Kamerasystems werden Bilder eines die Erntemaschine durchlaufenden Erntegutstromes aufgenommen und durch eine Bildauswertungsvorrichtung ausgewertet. Der Auswertung liegt die Bestimmung von Partikellängen von in den Bildern enthalten Partikeln zugrunde.

Ferner ist es aus dem Stand der Technik bekannt, Inhaltsstoffe des Erntegutes im Erntegutstrom, beispielsweise Proteingehalt oder Stärke, mittels Nahinfrarotspektroskopie zu bestimmen. Beispielhaft für die Inhaltsstoffbestimmung durch Nahinfrarotspektroskopie wird die DE 10 2010 002 343 A1 genannt.

Mit der Aufnahme von Erntegut durch das Vorsatzgerät gelangen zusätzlich am Erntegut anhaftende Verunreinigungen oder, bei zu geringem Abstand zum Feldboden, vom Vorsatzgerät selbst aufgenommene Verunreinigungen in den die Erntemaschine durchlaufenden Erntegutstrom. Der Grad der Verunreinigungen wirkt sich nachteilig auf die weitere Verwendung des bearbeiteten Erntegutes aus. So kann es bei einer Grünfutterernte durch enthaltene Verunreinigungen zur Fehlgärung der Silage oder zu Krankheiten bei den Tieren kommen, an welche das Grünfutter verfüttert wird. Damit geht zudem stets eine finanzielle Einbuße einher.

Als Indikator für den Verunreinigungsgrad des Erntegutes wird der Rohascheanteil verwendet. Der Rohascheanteil wird dabei durch die Nahinfrarotspektroskopie nicht direkt aufgrund von Messwerten für die Rohasche bestimmt, sondern durch Korrelation zu anderen Messgrößen geschätzt. Die Schätzung ist jedoch ungenau. Alternativ kann der Rohascheanteil im Labor durch Veraschung des Erntegutes bestimmt werden. Ein solches Verfahren ist jedoch durch eine Erntemaschine nicht darstellbar.

Ausgehend vom vorstehend genannten Stand der Technik liegt der Erfindung die Aufgabe zugrunde, eine selbstfahrende Erntemaschine bereitzustellen, welche eine Bestimmung des Verunreinigungsgrades des Erntegutstroms während des laufenden Erntebetriebes der Erntemaschine ermöglicht.

Diese Aufgabe wird erfindungsgemäß durch eine selbstfahrende Erntemaschine mit den Merkmalen des Anspruches 1 gelöst. Weiterhin wird die Aufgabe durch ein Verfahren zur Analyse von Inhaltsstoffen im Erntegut mit den Merkmalen des nebengeordneten Anspruches 15 gelöst. Vorteilhafte Weiterbildungen sind Gegenstand der abhängigen Ansprüche.

Gemäß dem Anspruch 1 wird eine selbstfahrende Erntemaschine vorgeschlagen, welche ein Vorsatzgerät zur Aufnahme von Erntegut, Arbeitsaggregate zur Bearbeitung des aufgenommenen Erntegutes, eine Überladevorrichtung zur Abgabe des bearbeitenden Erntegutes sowie ein Kamerasystem zur Erfassung von Bildern eines die Erntemaschine durchlaufenden Erntegutstromes und eine Bildauswertungsvorrichtung zur Auswertung der Bilder umfasst. Erfindungsgemäß ist vorgesehen, dass die Bildauswertungsvorrichtung dazu eingerichtet ist, die Bilder des Erntegutstroms auf einen mit der Aufnahme des Erntegutes durch das Vorsatzgerät aufgenommenen, im Erntegutstrom enthaltenen Anteil an, insbesondere anorganischen, Verunreinigungen mittels eines Maschinenlernalgorithmus zu analysieren.

Die vorliegende Erfindung beruht auf dem Gedanken, dass insbesondere anorganische Verunreinigungen des Erntegutes ihre Ursache unter anderem in der Einstellung von Arbeits- und Erntemaschinen haben, die in Vorbereitung und Durchführung des Ernteprozesses zum Einsatz kommen. Insbesondere können nicht optimal eingestellte Arbeits- und Erntemaschinen zu einem vermehrten Eintrag an anorganischen Verunreinigungen in das aufzunehmende Erntegut beitragen. Weitere Einflussfaktoren sind Umwelteinflüsse wie Starkregen oder Trockenheit, durch welche es verstärkt zu Verunreinigungen des Erntegutes kommen kann.

Die erfindungsgemäße selbstfahrende Erntemaschine ermöglicht es, den im Erntegutstrom enthaltenen Anteil an, insbesondere anorganischen, Verunreinigungen mittels des Maschinenlernalgorithmus im laufenden Erntebetrieb automatisch durch die Bildauswertungsvorrichtung zu analysieren. Die beschriebene Erfindung stellt die Möglichkeit dar, kostengünstig einen Verunreinigungsgrad des Erntegutes zu qualifizieren und/oder zu quantifizieren. Insbesondere kann die Analyse in Echtzeit durchgeführt werden.

Insbesondere kann die Bildauswertungsvorrichtung eine Recheneinheit und eine Speichereinheit umfassen, wobei in der Speichereinheit mehrere Kontaminationsklassen hinterlegt sind, die unterschiedliche Verunreinigungsgrade des Erntegutes definieren, welche vom Massegehalt an, insbesondere anorganischen, Verunreinigungen in der Trockenmasse des Erntegutes abhängig sind. Verunreinigungen, insbesondere anorganische Verunreinigungen, sind Sand, erdige Bestandteile wie Humus oder sonstige Bodenbestandteile. Dabei wird bevorzugt zwischen fünf Verunreinigungsgraden unterschieden, die sich aus dem Verhältnis von Massegehalt anorganischer Verunreinigungen zur Trockenmasse des Erntegutes ergeben. Insbesondere wird mittels des Maschinenlernalgorithmus der Sandgehalt, der Anteil an erdigen Bestandteilen und/oder ein sonstiger für Bodenmaterial repräsentativer Indikator als Verunreinigung im Erntegut bestimmt, um den Verunreinigungsgrad zu qualifizieren. Jedem Verunreinigungsgrad ist eine Kontaminationsklasse zugeordnet.

Bevorzugt kann der Maschinenlernalgorithmus zumindest ein trainierbares neuronales Netzwerk zur Analyse der Bilder umfassen.

Insbesondere kann das zumindest eine neuronale Netzwerk als Basis ein EfficientNet, insbesondere EfficientNetB0, als Architektur und Skalierungsmethode für faltungsneuronale Netze verwenden. Neuronale Faltungsnetzwerke oder auch Convolutional Neural Network (CNN) wie das EfficientNet erzielen in der Bildverarbeitung besonders gute Ergebnisse. EfficientNet skaliert alle Dimensionen von Tiefe/Breite/Auflösung einheitlich mit einem zusammengesetzten Koeffizienten. Im Gegensatz zur herkömmlichen Praxis bei der Verwendung eines neuronalen Faltungsnetzwerkes, bei der diese Faktoren willkürlich skaliert werden, skaliert die EfficientNet-Skalierungsmethode die Netzwerkbreite, -tiefe und -auflösung einheitlich mit einer Reihe fester Skalierungskoeffizienten. Die zusammengesetzte Skalierungsmethode ist durch die Intuition gerechtfertigt, dass das Netzwerk bei einem größeren Eingangsbild mehr Schichten benötigt, um das rezeptive Feld zu vergrößern, und mehr Kanäle, um mehr feinkörnige Muster auf dem größeren Bild zu erfassen.

Gemäß einer bevorzugten Weiterbildung kann das zumindest eine neuronale Netzwerk zur Analyse der von dem Kamerasystem empfangenen Bilder einen direkten Algorithmus verwenden, welcher als Eingangsgröße die Bilder im Rohdatenformat verwendet, die Bilder direkt einer Klassifizierung durch das zumindest eine neuronale Netzwerk unterzieht und als Ausgangsgröße eine der Kontaminationsklassen bestimmt. Der von dem neuronalen Netzwerk verwendete direkte Algorithmus verarbeitet die Bilder des Kamerasystems unmittelbar, d.h. ohne eine Vorverarbeitung durch semantische Segmentierung, um die Klassifizierung unmittelbar durchzuführen, mit der eine der Kontaminationsklassen als Ausgangsgröße bestimmt wird.

Gemäß einer alternativen Weiterbildung kann das zumindest eine neuronale Netzwerk zur Analyse der von dem Kamerasystem empfangenen Bilder einen hybrider Algorithmus verwenden, welcher als Eingangsgröße die Bilder im Rohdatenformat verwendet, die Bilder einer semantischen Segmentierung durch das neuronale Netzwerk unterzieht und als Ausgangsgröße aus den pixelweise segmentierten Bildern extrahierte Merkmale einem zweiten neuronalen Netzwerk als Eingangsgrößen zuführt, welches aus den extrahierten Merkmalen als Ausgangsgröße eine der Kontaminationsklassen bestimmt.

Hierzu kann das zumindest eine neuronale Netzwerk die von dem Kamerasystem empfangenen Bilder pixelweise segmentieren, indem jedem Pixel eine Klasse zugewiesen wird, welche als eine in der Speichereinheit hinterlegte Eigenschaft definiert ist.

Dabei kann als eine Klasse die Eigenschaft "Boden" und als eine weitere Klasse die Eigenschaft "Erntegut" hinterlegt sein. Eine Reduktion auf nur zwei Eigenschaften vereinfacht den Vorgang der semantischen Segmentierung durch das zumindest eine neuronale Netzwerk.

Insbesondere können in der Speichereinheit hinterlegte zu extrahierende Merkmale aus der Merkmalsgruppe Segmentierungsverhältnis, Polygonanzahl, mittlere Polygongröße, Standardabweichung der Polygongrößenverteilung, kleinste Polygongröße und größte Polygongröße sein. Hierzu können in dem jeweils pixelweise segmentierten Bild vorhandenen Polygone, die segmentierte Pixel der Klasse "Boden" enthalten, mittels eines Konturensuch-Algorithmus bestimmt werden.

Bevorzugt kann das zweite neuronale Netzwerk ein neuronales Netz mit einem Input-Layer, einem Hidden-Layer und einem Output-Layer sein.

Insbesondere kann das zumindest eine neuronale Netzwerk für die Bestimmung der Kontaminationsklasse zumindest drei zeitlich aufeinanderfolgend empfangene Bilder des Erntegutstroms auswerten, wobei die Ausgabe der Ergebnisse als gewichteter Mittelwert erfolgt. Dadurch lässt sich, unabhängig davon, ob der direkte Algorithmus oder der hybride Algorithmus verwendet wird, ein statistisch robuster Ausgabewert generieren.

Des Weiteren kann eine Auswahl eines der zumindest drei zeitlich aufeinanderfolgenden Bilder des Erntegutstroms erfolgen, für welches die Kontaminationsklasse bestimmt werden soll, wobei das ausgewählte Bild bei der Mittelwertbildung eine höhere Gewichtung aufweist als die zumindest zwei weiteren Bilder. Dabei kann das ausgewählte Bild mit 40% und die beiden anderen Bilder können mit 30 % gewichtet werden. Vorzugsweise ist das ausgewählte Bild das zweite Bild, der drei in zeitlicher Abfolge nacheinander aufgenommenen Bilder.

Bevorzugt ist der Erntegutstrom ein Grünfuttererntegutstrom. Dabei kann es sich um Mais, Gras oder Ganzpflanzensilage als Grünfutter handeln, welches von der Erntemaschine aufgenommen wird.

Weiter bevorzugt kann die Erntemaschine ein Feldhäcksler sein, mit einer als Auswurfkrümmer ausgeführten Überladevorrichtung, wobei das Kamerasystem eine auf dem Auswurfkrümmer angeordnete Kamera umfasst, welche zur Erfassung des den Auswurfkrümmer durchströmenden Erntegutstrom ausgeführt und eingerichtet ist.

Die eingangs gestellte Aufgabe wird weiterhin durch ein Verfahren mit den Merkmalen des Anspruches 15 gelöst.

Gemäß dem Anspruch 15 wird ein Verfahren zur Analyse von Inhaltsstoffen im Erntegut vorgeschlagen, welches von einer nach einem der vorangehenden Ansprüche ausgeführten selbstfahrenden Erntemaschine mit einem Vorsatzgerät aufgenommen, durch Arbeitsaggregate der Erntemaschine bearbeitet und durch eine Überladevorrichtung abgegeben wird, wobei Bilder eines die Erntemaschine durchlaufenden Erntegutstromes durch ein an der Überladevorrichtung angeordnetes Kamerasystem erfasst und durch eine Bildauswertungsvorrichtung ausgewertet werden, wobei die Bilder des Erntegutstroms durch die Bildauswertungsvorrichtung auf einen mit der Aufnahme durch das Vorsatzgerät aufgenommenen, im Erntegutstrom enthaltenen Anteil an anorganischen Verunreinigungen mittels eines Maschinenlernalgorithmus analysiert werden, wobei das Vorsatzgerät und/oder die Arbeitsaggregate der selbstfahrenden Erntemaschine in Abhängigkeit vom bestimmten Verunreinigungsgrad angesteuert werden. Auf die erfindungsgemäßen Ausführungen zur selbstfahrenden Erntemaschine darf verwiesen werden.

Zur Reduzierung von Verunreinigungen im aufgenommen Erntegut kann das höhenverstellbar an einer Einzugsvorrichtung angeordnete Vorsatzgerät angesteuert werden, indem der Abstand zum Feldboden verändert und/oder der Auflagedruck auf den Feldboden angepasst wird. Zusätzlich oder alternativ kann eine Quer- und/oder Längsanpassung des Vorsatzgerätes relativ zum Boden durchgeführt werden. Alternativ oder zusätzlich kann zur Minimierung der Aufnahme von Verunreinigungen vorgesehen sein, eine Antriebsdrehzahl zumindest einer gutfördernden Komponente des Vorsatzgerätes anzupassen. Die Art und Ausführung einer gutfördernden Komponente sind von der Ausführung des Vorsatzgerätes abhängig und können entsprechend variieren.

Zur Ansteuerung des Vorsatzgerätes kann die Erntemaschine eine Steuereinheit aufweisen, die mit der Bildauswertungsvorrichtung datentechnisch verbunden ist. Die Bildauswertungsvorrichtung kann den durch die Analyse bestimmten Verunreinigungsgrad an die Steuereinheit übertragen, welche in Abhängigkeit vom Verunreinigungsgrad eine oder mehrere der genannten Maßnahmen zur Ansteuerung des Vorsatzgerätes durchführt.

Die vorliegende Erfindung wird nachstehend anhand eines in den Zeichnungen dargestellten Ausführungsbeispieles näher erläutert.

Es zeigen:
- Fig. 1: schematisch und exemplarisch eine erfindungsgemäße selbstfahrende Erntemaschine;
- Fig. 2: exemplarisch eine schematische Darstellung einer Bildauswertungsvorrichtung;
- Fig. 3: exemplarisch eine schematische Darstellung einer Bildauswertungsvorrichtung gemäß einer alternativen Ausführung; und
- Fig. 4: exemplarisch ein mittels eines hybriden Algorithmus gemäß Fig. 3 durch ein neuronales Netzwerk segmentiertes Bild.

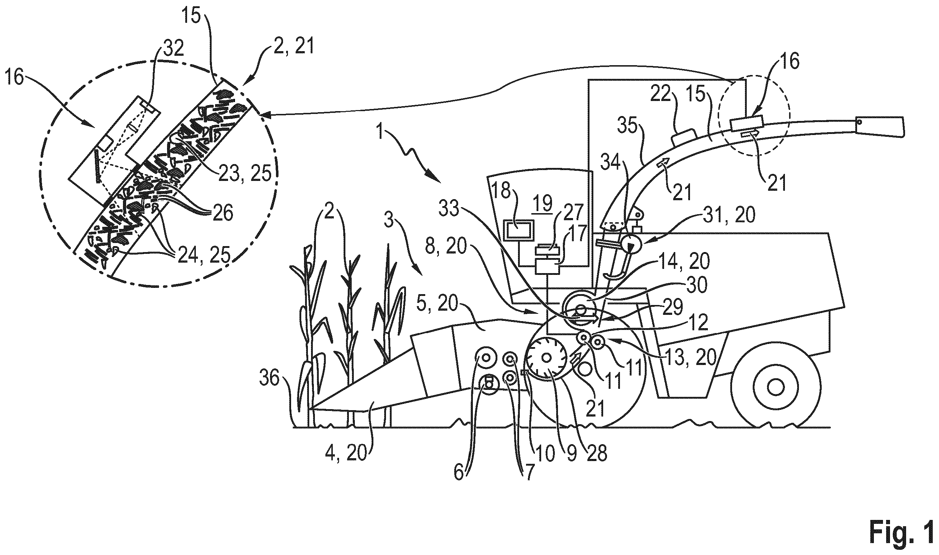

Fig. 1 zeigt schematisch und exemplarisch eine erfindungsgemäße selbstfahrende Erntemaschine 1, hier und vorzugsweise einen Feldhäcksler, beim Abernten und Aufnehmen eines Bestandes von Erntegut 2, beispielsweise Maispflanzen, Gras oder Ganzpflanzensilage als Grünfutter, auf einem Feld. Eine Aufnahmevorrichtung 3 der Erntemaschine 1 umfasst in an sich bekannter Weise ein in Anpassung an das zu erntende bzw. aufzunehmende Erntegut 2 austauschbares Vorsatzgerät 4 und eine Einzugseinrichtung 5 mit mehreren Walzenpaaren 6, 7, die das Erntegut 2 von dem Vorsatzgerät 4 übernimmt, um es einer Häckselvorrichtung 8 zuzuführen. Das aufgenommene Erntegut 2 durchläuft die Erntemaschine 1 als - durch Pfeile veranschaulichter - Erntegutstrom 21.

Das Vorsatzgerät 4 kann beispielsweise als Maisgebiss ausgeführt sein, um stängeliges Erntegut 2 zu ernten oder als Pick-Up, welche auf dem Feld in Schwaden abgelegtes Erntegut 2, insbesondere Gras, aufnimmt. Das Vorsatzgerät 4 kann auch einen Mähbalken mit Einzugsschnecke aufweisen, um Gras in einem Arbeitsgang zu mähen und aufzunehmen.

Die Häckselvorrichtung 8 umfasst eine drehangetriebene Häckseltrommel 9, eine Gegenschneide 10, über welche das Erntegut 2 von dem benachbarten Walzenpaar 7 der Einzugseinrichtung 5 hindurch geschoben werden, um durch Zusammenwirken der Gegenschneide 10 mit der Häckseltrommel 9 zerkleinert zu werden. Mittels einer Aktorik ist ein Abstand eines Trommelbodens 28, der die Häckseltrommel 9 in Umfangsrichtung abschnittsweise umgibt, verstellbar.

Der Häckselvorrichtung 8 ist eine optionale Nachzerkleinerungsvorrichtung 13, auch als Corn-Cracker bezeichnet, mit einem Paar von Konditionier- oder Crackerwalzen 11 nachgeordnet, die im Auswurfkanal 29 entnehmbar und/oder ausschwenkbar angeordnet ist. Die Konditionierwalzen 11 begrenzen einen Spalt 12 von verstellbarer Breite und rotieren mit unterschiedlichen Geschwindigkeiten, um in dem durch den Spalt 12 hindurchtretenden Materialstrom enthaltene Körner zu zerkleinern.

Ein Nachbeschleuniger 14 verleiht dem zerkleinerten und in der optionalen Nachzerkleinerungsvorrichtung 13 konditionierten Erntegutstrom 21 die notwendige Geschwindigkeit, um eine als Auswurfkrümmer 15 ausgeführte Überladevorrichtung zu durchlaufen und in ein (nicht dargestelltes) Begleitfahrzeug übergeladen zu werden. Der Nachbeschleuniger 14 ist in einem zur gegenüberliegenden Wandung 30 des Auswurfkanals 29 veränderbaren Abstand angeordnet. Der Nachbeschleuniger 14 kann in horizontaler Richtung näher an die Wandung 30 heran oder von dieser weg bewegt werden, was durch einen Pfeil 33 veranschaulicht ist.

Dem Nachbeschleuniger 14 nachgeordnet kann eine Siliermitteldosiervorrichtung 31 angeordnet sein, die mittels einer ansteuerbaren Förderpumpe 34 mit veränderlichem Fördervolumen eine Flüssigkeit in den Auswurfkanal 29 einbringt.

Der Auswurfkrümmer 15 weist über seine Längserstreckung einen im Wesentlichen rechteckförmigen Querschnitt auf. Der Auswurfkrümmer 15 weist eine durchgehende geschlossene Oberseite 35 und eine abschnittsweise offen ausgeführte Unterseite auf. Orthogonal zur Oberseite 35 des Auswurfkrümmers 15 sind Seitenwände angeordnet, welche den durch den Auswurfkrümmer 15 hindurch geförderten Erntegutstrom 21 seitlich begrenzen und führen.

An dem Auswurfkrümmer 15 ist zumindest ein Kamerasystem 16 angeordnet, um Bilder 41 des durch den Auswurfkrümmer 15 hindurch geförderten Erntegutstroms 21 zu erzeugen. Weiterhin kann auf dem Auswurfkrümmer 15 ein NIR-Sensor 22 angeordnet sein. Mittels des NIR-Sensors 22 lassen sich Ernteguteigenschaften bestimmen. Der NIR-Sensor 22 ist hier und bevorzugt dem Kamerasystem 16 vorgeordnet auf der Oberseite 35 des Auswurfkrümmers 16 positioniert.

Das Vorsatzgerät 4, die Einzugsvorrichtung 5, die Häckselvorrichtung 8, die optionale Nachzerkleinerungsvorrichtung 13, der Nachbeschleuniger 14 sowie die Siliermitteldosiervorrichtung 31 und deren jeweilige Komponenten sind Arbeitsaggregate 20 der Erntemaschine 1, die dem Abernten bzw. Aufnehmen des Erntegutes 2 eines Feldbestandes und/oder der Bearbeitung des Erntegutes 2 im Rahmen des Ernteprozesses dienen.

Der von den Arbeitsaggregaten 20 der Erntemaschine 1 bearbeitete Erntegutstrom 21 weist in Abhängigkeit von der Erntegutart eine unterschiedliche Zusammensetzung auf. So sind bei Mais als Erntegutart im Wesentlichen ganze Körner 23 und zerkleinerte Körner 24 als Kornbestandteile 25 sowie Nicht-Kornbestandteile 26, wie Stängel, Blätter und dergleichen, im Erntegutstrom 21 enthalten. Bei der Erntegutart Gras enthält der Erntegutstrom 21 im Wesentlichen nur geschnittenes Gras als Erntegut 2.

Zusätzlich gelangen durch das Vorsatzgerät 4 mit dem aufgenommenen Erntegut 2 an dem Erntegut 2 anhaftende Verunreinigungen oder, bei zu geringem Abstand zum Feldboden 36, vom Vorsatzgerät 4 selbst aufgenommene Verunreinigungen in den die Erntemaschine 1 durchlaufenden Erntegutstrom 21. An dem Erntegut 2 anhaftende Verunreinigungen können unter anderem auf einen vorangehenden Bearbeitungsprozess auf dem Feld zurückgehen. Beispielhaft hierfür sind im Fall der Grasernte das Mähen, Wenden sowie Schwaden zu nennen.

Das an dem Auswurfkrümmer 15 angeordnete zumindest eine Kamerasystem 16 weist zumindest eine Kamera 32 zur Aufnahme von Bildern 41 des im Erntegutstrom 21 enthaltenen Ernteguts 2 auf. Die Kamera 32 kann als eine Multispektralkamera ausgeführt sein, die Licht mit mindestens drei unterscheidbaren Wellenlängenbereichen aufnimmt. Alternativ kann die Kamera 32 kann als Hyperspektralkamera ausgeführt sein. Insbesondere kann die Kamera 32 sichtbares Licht und infrarotes Licht, insbesondere nah-infrarotes Licht, aus unterschiedlichen Wellenlängenbereichen aufnehmen.

Die Bilder 41 werden im Rohdatenformat abgespeichert. Die zumindest eine Kamera 32 nimmt ortsaufgelöst Bilder 41 auf. Der Begriff "ortsaufgelöst" bedeutet hier, dass es mittels der Bildern 41 möglich ist, Einzelheiten des Ernteguts 2 sowie Verunreinigungen voneinander zu unterscheiden. Die Kamera 32 weist also zumindest genügend Pixel auf, um eine noch zu erläuternde Analyse der Bilder 41 durch die Bildauswertungsvorrichtung 27 zu ermöglichen. Das Kamerasystem 16 erfasst in einer Messroutine mittels der Kamera 32 mehrere Bilder 41 des Ernteguts 2 sowie der im Erntegutstrom 21 mitgeführten Verunreinigungen. Diese Messroutine wird entsprechend während des Betriebs der Erntemaschine 1 durchgeführt.

Die Bildauswertungsvorrichtung 27 ist mit einem Fahrerassistenzsystem 17 verbunden oder kann als Bestandteil des Fahrerassistenzsystems 17 ausgeführt sein. Das Fahrerassistenzsystem 17 weist einen Speicher 39 zum Hinterlegen von Daten und eine Rechenvorrichtung 40 zur Verarbeitung der in dem Speicher 39 hinterlegten Daten auf. Das Fahrerassistenzsystem 17 kann mit einer Eingabe-Ausgabe-Einheit 18 in einer Fahrerkabine 19 der Erntemaschine 1 verbunden sein, um Auswertungsergebnisse darauf auszugeben. Das Fahrerassistenzsystem 17 steuert zumindest ein Stellglied zum Einstellen eines der Arbeitsaggregate 20 an.

Die Bildauswertungsvorrichtung 27 ist dazu eingerichtet, die Bilder 41 des Erntegutstroms 21 auf einen mit der Aufnahme des Erntegutes 2 durch das Vorsatzgerät 4 aufgenommenen, im Erntegutstrom 21 enthaltenen Anteil an anorganischen Verunreinigungen mittels eines Maschinenlernalgorithmus zu analysieren.

Die Bildauswertungsvorrichtung 27 umfasst eine Recheneinheit 37 und eine Speichereinheit 38. In der Speichereinheit 38 sind mehrere Kontaminationsklassen hinterlegt oder hinterlegbar, die unterschiedliche Verunreinigungsgrade VG definieren, welche vom Massegehalt an anorganischen Verunreinigungen, insbesondere Sand, erdigen Bestandteilen wie Humus, sonstigen Bodenbestandteile oder dergleichen, in der Trockenmasse des Erntegutes 2 abhängig sind.

In nachstehender Tabelle ist eine exemplarische Klassifizierung gemäß Resch et. al. 2013 "Bedeutung des Eisengehaltes als Indikator für die Futterverschmutzung von Grünlandfuttermitteln" wiedergegeben. Neben dem Gehalt an Eisen wird der in der Trockenmasse des Erntegutes 2 enthaltene Sandanteil als Indikator für die Futterverschmutzung angeführt. Weitere Indikatoren können erdige Bestandteile wie Humus oder sonstige Bodenbestandteile sein. Jedem Verunreinigungsgrad VG ist eine Kontaminationsklasse zugeordnet.

**Tabelle:**

| Kontaminationsklasse | Verunreinigungsgrad VG | Eisen [mg/kg TM] | Sandanteil [g/kg TM] |
|---|---|---|---|
| 1 | Sauber | Unter 400 | Unter 13 |
| 2 | Leicht | 400 bis 800 | 13 bis 19 |
| 3 | Mäßig | 800 bis 1500 | 19 bis 30 |
| 4 | Stark | 1500 bis 3000 | 30 bis 53 |
| 5 | Sehr stark | Über 3000 | Über 53 |

Der Maschinenlernalgorithmus umfasst zumindest ein trainierbares neuronales Netzwerk 42 zur Analyse der Bilder 41 des Erntegutstromes 21. Bevorzugt verwendet das zumindest eine neuronale Netzwerk 42 als Basis ein EfficientNet, insbesondere EfficientNetB0, als Architektur und Skalierungsmethode für faltungsneuronale Netze.

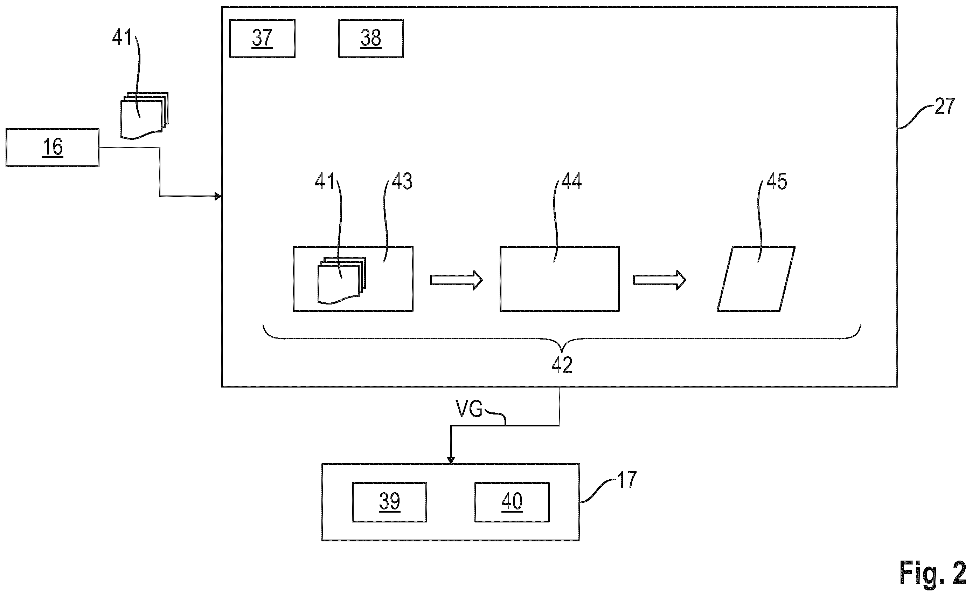

In Fig. 2 ist exemplarisch eine schematische Darstellung der Bildauswertungsvorrichtung 27 gezeigt. Gemäß der in Fig. 2 dargestellten Ausführungsform der Bildauswertungsvorrichtung 27 ist vorgesehen, dass das zumindest eine neuronale Netzwerk 42 zur Analyse der von dem Kamerasystem 16 empfangenen Bilder 41 einen direkten Algorithmus verwendet, welcher als Eingangsgröße 43 die Bilder 41 im Rohdatenformat verwendet, die direkt, d.h. ohne einen Zwischenschritt zur semantischen Segmentierung, in einem Klassifizierungsschritt 44 einer Klassifizierung durch das zumindest eine neuronale Netzwerk 42 unterzogen werden und als Ausgangsgröße 45 eine der in der Speichereinheit 38 hinterlegten Kontaminationsklassen bestimmt.

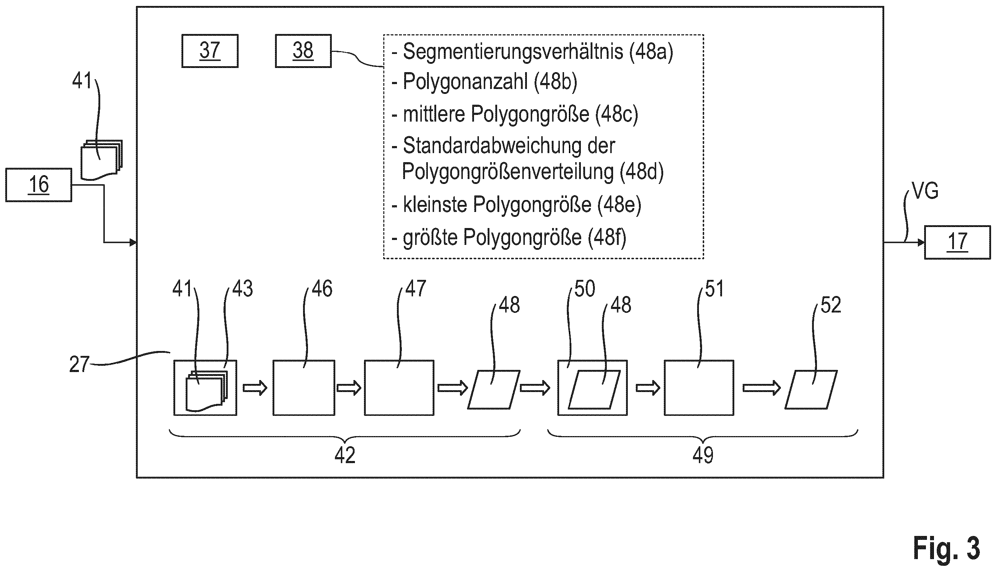

Die Darstellung in Fig. 3 zeigt exemplarisch eine schematische Darstellung der Bildauswertungsvorrichtung 27 gemäß einer alternativen Ausführung. Gemäß der alternativen Ausführung der Bildauswertungsvorrichtung 27 ist vorgesehen, dass das zumindest eine neuronale Netzwerk 42 zur Analyse der von dem Kamerasystem 16 empfangenen Bilder 41 einen hybrider Algorithmus verwendet, welcher als Eingangsgröße 43 die im Rohdatenformat empfangenen Bilder 41 verwendet, die einer semantischen Segmentierung durch ein Segmentierungsmodell 46 durch das neuronale Netzwerk 42 unterzogen werden und als Ausgangsgröße aus den pixelweise segmentierten Bildern 41 extrahierte Merkmale 48 generiert. Die als Ausgangsgrößen generierten Merkmale 48 des neuronalen Netzwerk 42 werden einem zweiten neuronalen Netzwerk 49 als Eingangsgrößen 50 zuführt, welches aus den extrahierten Merkmalen 48 in einem Klassifizierungsschritt 51 als Ausgangsgröße 52 eine der in der Speichereinheit 38 hinterlegten Kontaminationsklassen bestimmt.

Hierzu ist vorgesehen, dass das neuronale Netzwerk 42 die von dem Kamerasystem 16 empfangenen Bilder 41 pixelweise segmentiert, indem jedem Pixel eine Klasse zugewiesen wird, welche als eine in der Speichereinheit 38 hinterlegte Eigenschaft definiert ist. Dabei kann als eine Klasse 55 die Eigenschaft "Boden" und als eine weitere Klasse 56 die Eigenschaft "Erntegut" hinterlegt sein.

In der Speichereinheit 38 hinterlegte extrahierte Merkmale 48 sind hier und vorzugsweise aus der Merkmalsgruppe Segmentierungsverhältnis 48a, Polygonanzahl 48b, mittlere Polygongröße 48c, Standardabweichung der Polygongrößenverteilung 48d, kleinste Polygongröße 48e und größte Polygongröße 48f. Die Polygone 53 werden dazu mittels eines Konturensuch-Algorithmus 47 bestimmt, der von dem neuronale Netzwerk 42 ausgeführt wird, um daraus die Merkmale 48 aus der vorstehend genannten Merkmalsgruppe zu extrahieren.

Das Merkmal 48 "Segmentierungsverhältnis 48a" beschreibt die Anzahl von als "Boden" klassifizierten Pixeln 55 im Verhältnis zur Gesamtanzahl an Pixeln 54 im Bild 41a. Das Merkmal 48 "Polygonanzahl 48b" beschreibt die Anzahl an als "Boden" klassifizierten Flächen. Das Merkmal 48 "mittlere Polygongröße 48c" beschreibt eine durchschnittliche Größe der Polynome 53. Das Merkmal 48 "kleinste Polygongröße 48e" gibt die Anzahl an Pixeln 54 der Klasse 55 des kleinsten bestimmten Polygons 53 wieder. Das Merkmal 48 "größte Polygongröße 48f" gibt die Anzahl an Pixeln 54 der Klasse 55 des größten bestimmten Polygons 53 wieder.

Bevorzugt kann das zweite neuronale Netzwerk 49 ein neuronales Netz mit einem Input-Layer, einem, insbesondere nur einem, Hidden-Layer und einem Output-Layer sein. Das zweite neuronale Netzwerk 49 kann für den auf die Klassifizierung beschränkten Vorgang als einfaches neuronales Netzwerk ausgeführt sein.

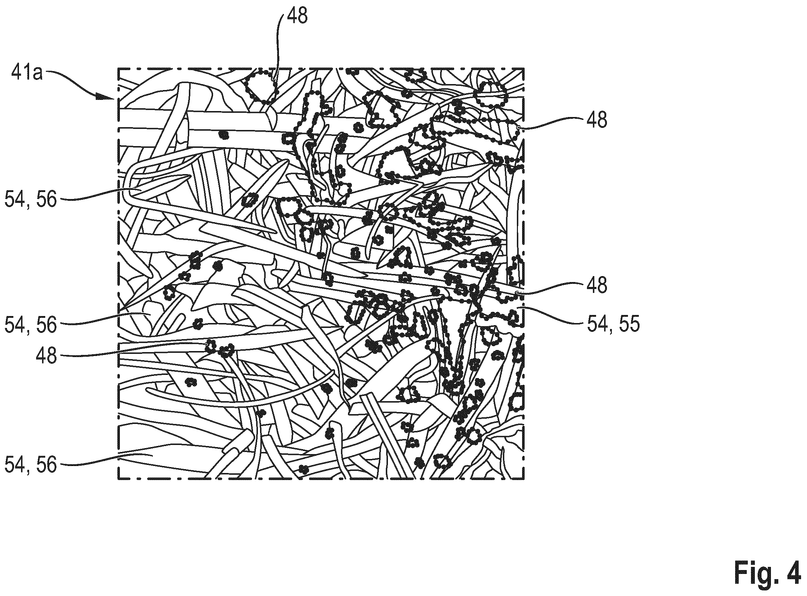

In Fig. 4 ist exemplarisch ein mittels des hybriden Algorithmus gemäß Fig. 3 durch das neuronale Netzwerk 42 segmentiertes Bild 41a dargestellt. Die im Rohdatenformat als Eingangsgröße 43 an das neuronale Netzwerk 42 übertragenen Bilder 41 werden durch das Segmentierungsmodell 46 pixelweise segmentiert. Jedem segmentierten Pixel 54 des Bildes 41a wird entweder die Klasse 55 mit der Eigenschaft "Boden" oder die weitere Klasse 56 mit der Eigenschaft "Erntegut" zugeordnet. In Fig. 4 umrandete Bereiche sind zusammenhängende Flächen von Pixeln 54, die der Klasse 55 mit der Eigenschaft "Boden" zugeordnet wurden. Mittels des Konturensuch-Algorithmus 47 werden auf Grundlage der zusammenhängenden Flächen von Pixeln 54, die der Klasse 55 mit der Eigenschaft "Boden" zugeordnet wurden, die Polygone 53 bestimmt. Aus den bestimmten Polygonen 53 werden die Merkmale 48 als Ausgangsgröße des neuronalen Netzwerkes 42 extrahiert.

Das zweite neuronale Netzwerk 49 verarbeitet die extrahierten Merkmale 48 als Eingangsgröße 50 in dem Klassifizierungsschritt 51 und bestimmt als Ausgangsgröße 52 eine der in der Speichereinheit 38 hinterlegten Kontaminationsklassen.

Das neuronale Netzwerk 42 ist dazu eingerichtet, für die Bestimmung der Kontaminationsklasse zumindest drei zeitlich aufeinanderfolgend empfangene Bilder 41a des Erntegutstroms 21 auszuwerten, wobei die Ausgabe der Ergebnisse als gewichteter Mittelwert erfolgt. Dadurch lässt sich, unabhängig davon, ob der direkte Algorithmus, welcher von dem neuronalen Netzwerk 42 alleine ausgeführt wird, oder der hybride Algorithmus, welcher von den beiden neuronalen Netzwerke 42 und 49 ausgeführt wird, verwendet wird, ein statistisch robuster Ausgabewert für die Ausgangsgröße 45 bzw. 52, d.h. die Zuordnung zu einer der in Tabelle 1 aufgeführten Kontaminationsklassen und damit zu einem der Verunreinigungsgrade VG, generieren.

Des Weiteren kann eine Auswahl eines der zumindest drei zeitlich aufeinanderfolgenden Bilder 41 des Erntegutstroms 221 erfolgen, für welches die Kontaminationsklasse als Ausgangsgröße 45 bzw. 52 bestimmt werden soll, wobei das ausgewählte Bild 41 bei der Mittelwertbildung eine höhere Gewichtung aufweist als die zumindest zwei weiteren Bilder 41. Dabei kann das ausgewählte Bild 41 mit 40 % und die beiden anderen Bilder 41 können mit 30 % gewichtet werden. Vorzugsweise ist das ausgewählte Bild 41 das zweite Bild, der drei in zeitlicher Abfolge nacheinander aufgenommenen Bilder 41.

Die vorstehend beschriebene Erntemaschine 1 ist zur Durchführung des Verfahren zur Analyse von Inhaltsstoffen im Erntegut 2 eingerichtet. Das Erntegut 2 wird von der selbstfahrenden Erntemaschine 1 mit dem Vorsatzgerät 4 aufgenommen, durch die Arbeitsaggregate 20 der Erntemaschine 1 bearbeitet und durch die Überladevorrichtung 15 abgegeben. Es werden die Bilder 41 des die Erntemaschine 1 durchlaufenden Erntegutstromes 21 durch das an der Überladevorrichtung 15 angeordnetes Kamerasystem 16 erfasst und durch die Bildauswertungsvorrichtung 27 ausgewertet. Der im Erntegutstrom 21 enthaltene Anteil an anorganischen Verunreinigungen wird mittels des Maschinenlernalgorithmus unter Verwendung eines direkten oder hybriden Algorithmus analysiert. Das Vorsatzgerät 4 und/oder die Arbeitsaggregate 20 der selbstfahrenden Erntemaschine 1 in Abhängigkeit vom bestimmten Verunreinigungsgrad VG angesteuert. Hierfür kann vorzugsweise das Fahrerassistenzsystem 17 eingerichtet sein, welches die von der Bildauswertungsvorrichtung 27 generierten Ausgangsgrößen 45 bzw. 52 empfängt und daraus Steuersignale zur Ansteuerung ableitet.

**Bezugszeichenliste**

| | | | |
|---|---|---|---|
| 1 | Erntemaschine | 33 | Pfeil |
| 2 | Erntegut | 34 | Förderpumpe |
| 3 | Aufnahmevorrichtung | 35 | Oberseite |
| 4 | Vorsatzgerät | 36 | Feldboden |
| 5 | Einzugseinrichtung | 37 | Recheneinheit |
| 6 | Walzenpaar | 38 | Speichereinheit |
| 7 | Walzenpaar | 39 | Speicher |
| 8 | Häckselvorrichtung | 40 | Rechenvorrichtung |
| 9 | Häckseltrommel | 41 | Bilder |
| 10 | Gegenschneide | 41a | Segmentiertes Bild |
| 11 | Crackerwalzen | 42 | Neuronales Netzwerk |
| 12 | Spalt | 43 | Eingangsgröße |
| 13 | Nachzerkleinerungsvorrichtung | 44 | Klassifizierungsschritt |
| 14 | Nachbeschleuniger | 45 | Ausgangsgröße |
| 15 | Auswurfkrümmer | 46 | Segmentierungsmodell |
| 16 | Kamerasystem | 47 | Konturensuch-Algorithmus |
| 17 | Fahrerassistenzsystem | 48 | Merkmal |
| 18 | Eingabe-Ausgabe-Einheit | 48a | Segmentierungsverhältnis |
| 19 | Fahrerkabine | 48b | Polygonanzahl |
| 20 | Arbeitsaggregat | 48c | Mittlere Polygongröße |
| 21 | Erntegutstrom | 48d | Standardabweichung der Polygongrößenverteilung |
| 22 | NIR-Sensor | 48e | Kleinste Polygongröße |
| 23 | Körner | 48f | Größte Polygongröße |
| 24 | Zerkleinerte Körner | 49 | Zweites neuronales Netzwerk |
| 25 | Kornbestandteile | 50 | Eingangsgröße |
| 26 | Nicht-Kornbestandteile | 51 | Klassifizierungsschritt |
| 27 | Bildauswertungsvorrichtung | 52 | Ausgangsgröße |
| 28 | Trommelboden | 53 | Polygon |
| 29 | Auswurfkanal | 54 | Pixel |
| 30 | Wandung | 55 | Klassifizierte Pixel |
| 31 | Siliermitteldosiervorrichtung | 56 | Klassifizierte Pixel |
| 32 | Kamera | VG | Verunreinigungsgrad |

## Patentansprüche

1. Selbstfahrende Erntemaschine (1), wobei die Erntemaschine (1) ein Vorsatzgerät (4) zur Aufnahme von Erntegut (2), Arbeitsaggregate (20) zur Bearbeitung des aufgenommenen Erntegutes (2), eine Überladevorrichtung (15) zur Abgabe des bearbeitenden Erntegutes (2) sowie ein Kamerasystem (16) zur Erfassung von Bildern (41) eines die Erntemaschine (1) durchlaufenden Erntegutstromes (21) und eine Bildauswertungsvorrichtung (27) zur Auswertung der Bilder (41) umfasst, **dadurch gekennzeichnet, dass** die Bildauswertungsvorrichtung (27) dazu eingerichtet ist, die Bilder (41) des Erntegutstroms (21) auf einen mit der Aufnahme des Erntegutes (2) durch das Vorsatzgerät (4) aufgenommenen, im Erntegutstrom (21) enthaltenen Anteil an, insbesondere anorganischen, Verunreinigungen mittels eines Maschinenlernalgorithmus zu analysieren.

2. Selbstfahrende Erntemaschine (1) nach Anspruch 1, **dadurch gekennzeichnet, dass** die Bildauswertungsvorrichtung (27) eine Recheneinheit (37) und eine Speichereinheit (38) umfasst, wobei in der Speichereinheit (38) mehrere Kontaminationsklassen hinterlegt sind, die unterschiedliche Verunreinigungsgrade (VG) definieren, welche vom Massegehalt an anorganischen Verunreinigungen, insbesondere Sand, erdigen Bestandteilen wie Humus oder sonstigen Bodenbestandteilen, in der Trockenmasse des Erntegutes (2) abhängig sind.

3. Selbstfahrende Erntemaschine (1) nach Anspruch 1 oder 2, **dadurch gekennzeichnet, dass** der Maschinenlernalgorithmus zumindest ein trainierbares neuronales Netzwerk (42) zur Analyse der Bilder (41) umfasst.

4. Selbstfahrende Erntemaschine (1) nach Anspruch 3, **dadurch gekennzeichnet, dass** das zumindest eine neuronale Netzwerk (42) als Basis ein EfficientNet, insbesondere EfficientNetB0, als Architektur und Skalierungsmethode für faltungsneuronale Netze verwendet.

5. Selbstfahrende Erntemaschine (1) nach Anspruch 3 oder 4, **dadurch gekennzeichnet, dass** das zumindest eine neuronale Netzwerk (42) zur Analyse der von dem Kamerasystem (16) empfangenen Bilder (41) einen direkten Algorithmus verwendet, welcher als Eingangsgröße (43) die Bilder (41) im Rohdatenformat verwendet und diese direkt einer Klassifizierung durch das zumindest eine neuronale Netzwerk (42) unterzieht und als Ausgangsgröße (45) eine der Kontaminationsklassen bestimmt.

6. Selbstfahrende Erntemaschine (1) nach einem der Ansprüche 1 bis 4, **dadurch gekennzeichnet, dass** das zumindest eine neuronale Netzwerk (42) zur Analyse der von dem Kamerasystem (16) empfangenen Bilder (41) einen hybrider Algorithmus verwendet, welcher als Eingangsgröße (43) die Bilder (41) im Rohdatenformat verwendet, die Bilder (41) einer semantischen Segmentierung durch das neuronale Netzwerk (42) unterzieht und als Ausgangsgröße aus den pixelweise segmentierten Bildern (41a) extrahierte Merkmale (48) einem zweiten neuronalen Netzwerk (49) als Eingangsgrößen (50) zuführt, welches aus den extrahierten Merkmalen (48) als Ausgangsgröße (52) eine der Kontaminationsklassen bestimmt.

7. Selbstfahrende Erntemaschine (1) nach Anspruch 6, **dadurch gekennzeichnet, dass** das zumindest eine neuronale Netzwerk (42) die von dem Kamerasystem (16) empfangenen Bilder (41) pixelweise segmentiert, indem jedem Pixel (54) eine Klasse zugewiesen wird, welche als eine in der Speichereinheit (38) hinterlegte Eigenschaft definiert ist.

8. Selbstfahrende Erntemaschine (1) nach Anspruch 7, **dadurch gekennzeichnet, dass** als eine Klasse die Eigenschaft "Boden" und als eine weitere Klasse die Eigenschaft "Erntegut" in der Speichereinheit (38) hinterlegt sind.

9. Selbstfahrende Erntemaschine (1) nach Anspruch 6 bis 8 **dadurch gekennzeichnet, dass** in der Speichereinheit (38) hinterlegte zu extrahierende Merkmale (48) aus der Merkmalsgruppe Segmentierungsverhältnis (48a), Polygonanzahl (48b), mittlere Polygongröße (48c), Standardabweichung der Polygongrößenverteilung (48d), kleinste Polygongröße (48e) und größte Polygongröße (48f) sind, wobei Polygone (53), die segmentierte Pixel (55) der Klasse "Boden" enthalten, mittels eines Konturensuch-Algorithmus (47) bestimmt werden.

10. Selbstfahrende Erntemaschine nach Anspruch 8 bis 10, **dadurch gekennzeichnet, dass** das zweite neuronale Netzwerk (49) ein neuronales Netz mit einem Input-Layer, einem Hidden-Layer und einem Output-Layer ist.

11. Selbstfahrende Erntemaschine (1) nach einem der Ansprüche 4 bis 10, **dadurch gekennzeichnet, dass** das zumindest eine neuronale Netzwerk (42) für die Bestimmung der Kontaminationsklasse zumindest drei zeitlich aufeinanderfolgend empfangene Bilder (41) des Erntegutstroms (21) auswertet, wobei die Ausgabe der Ergebnisse als gewichteter Mittelwert erfolgt.

12. Selbstfahrende Erntemaschine () nach Anspruch 11 **dadurch gekennzeichnet, dass** eine Auswahl eines der zumindest drei zeitlich aufeinanderfolgenden Bilder (41) des Erntegutstroms (21) erfolgt, für welches die Kontaminationsklasse bestimmt werden soll, wobei das ausgewählte Bild (41) bei der Mittelwertbildung eine höhere Gewichtung aufweist als die zumindest zwei weiteren Bilder (41).

13. Selbstfahrende Erntemaschine (1) nach einem der vorangehenden Ansprüche, **dadurch gekennzeichnet, dass** der Erntegutstrom (21) ein Grünfuttererntegutstrom ist.

14. Selbstfahrende Erntemaschine (1) nach einem der vorangehenden Ansprüche, **dadurch gekennzeichnet, dass** die Erntemaschine (1) ein Feldhäcksler ist, mit einer als Auswurfkrümmer ausgeführten Überladevorrichtung (15), wobei das Kamerasystem (16) eine auf dem Auswurfkrümmer angeordnete Kamera (32) umfasst, welche zur Erfassung des den Auswurfkrümmer durchströmenden Erntegutstrom (21) ausgeführt und eingerichtet ist.

15. Verfahren zur Analyse von Inhaltsstoffen im Erntegut (2), welches von einer nach einem der vorangehenden Ansprüche ausgeführten selbstfahrenden Erntemaschine (1) mit einem Vorsatzgerät (4) aufgenommen, durch Arbeitsaggregate (20) der Erntemaschine (1) bearbeitet und durch eine Überladevorrichtung (15) abgegeben wird, wobei Bilder (41) eines die Erntemaschine (1) durchlaufenden Erntegutstromes (21) durch ein an der Überladevorrichtung (15) angeordnetes Kamerasystem (16) erfasst und durch eine Bildauswertungsvorrichtung (27) ausgewertet werden, **dadurch gekennzeichnet, dass** die Bilder (41) des Erntegutstroms (21) durch die Bildauswertungsvorrichtung (27) auf einen mit der Aufnahme durch das Vorsatzgerät (4) aufgenommenen, im Erntegutstrom (21) enthaltenen Anteil an, insbesondere anorganischen, Verunreinigungen mittels eines Maschinenlernalgorithmus analysiert werden, wobei das Vorsatzgerät (4) und/oder die Arbeitsaggregate (20) der selbstfahrenden Erntemaschine (1) in Abhängigkeit vom bestimmten Verunreinigungsgrad (VG) angesteuert werden.
